# EUROPEAN PATENT SPECIFICATION

(11) **EP 3 242 494 B1**
(45) Date of publication and mention of the grant of the patent: **15.07.2020**
(21) Application number: 15875059.6
(22) Date of filing: 08.12.2015
(51) Int. Cl.: H04W 4/00, G06F 21/74, H04W 4/80, G06F 21/53, H04W 8/00, H04W 76/14

(54) **NFC-BASED COMMUNICATION DEVICE AND METHOD**
KOMMUNIKATIONSVORRICHTUNG AUF NFC-BASIS UND -VERFAHREN
DISPOSITIF ET PROCÉDÉ DE COMMUNICATION BASÉ SUR NFC

(30) Priority: 29.12.2014 CN 201410830958
(43) Date of publication of application: 08.11.2017
(73) Proprietor: China Unionpay Co., Ltd., Pudong New Area Shanghai 200135 (CN)
(72) Inventor: GUO, Wei, Shanghai 200135 (CN); LI, Dingzhou, Shanghai 200135 (CN); ZHOU, Yu, Shanghai 200135 (CN)
(74) Representative: Schneider, Sascha
(86) International application number: PCT/CN2015/096706
(87) International publication number: WO 2016/107381

(56) References cited:
- WO-A1-2014/202200
- CN-A- 103 544 599
- CN-A- 103 745 155
- US-A1- 2008 155 257
- US-A1- 2008 155 257
- US-A1- 2014 256 252
- US-B1- 8 712 407

## Description

### FIELD OF INVENTION

The present invention relates to NFC communication, and more particularly, to a NFC-based communication apparatus and a method thereof.

### BACKGROUND

The technology of Trusted Execution Environment (TEE) is capable of providing a trusted execution environment guarded by hardware for communication apparatuses such as smart terminals, etc. Under the environment, security related sensitive operations on smart terminals are accomplished based on TEE, thus strengthening the security for data.

The technology of Near Field Communication (NFC) is used for non-contact recognition, such that short distance wireless communication can be performed among mobile devices, consumer electronics, PCs, and smart control tools.

In the prior art, the NFC function is implemented under a rich execution environment (for example, Android, IOS, etc.), which will impair the secure closed loop of the trusted execution environment. For example, the secure payment information, such as financial transactions, etc., need to be transmitted to a secure trusted execution environment via an insecure rich execution environment, during which the sensitive information may be stolen or tampered. US 2008/155257 A1, US 8712407 B1, WO 2014/02200 A1 and US 2014/25625 A1 disclose NFC applications.

### SUMMARY OF INVENTION

The present invention is defined by a NFC-based communication apparatus according to claim 1 and a NFC-based communication method according to claim 3. Further embodiments are defined by the dependent claims.

The present invention is capable of enhancing the security of NFC communication. By setting a NFC module which implements only part of the traditional protocol stack in the TEE, the storage load of TEE environment is reduced, and the flexibility of NFC communication is increased.

### BRIEF DESCRIPTION OF DRAWINGS

After reading the Description of Embodiments of the invention by reference to the drawings, one skilled in the art may get to know the invention more clearly. It should be understood by one skilled in the art that the drawings are merely used for explaining the technical solution of the invention in coordination with the Description of Embodiments, rather than intended to limit the protecting scope of the invention.
Fig. 1 is a schematic diagram of a NFC-based communication apparatus according to an embodiment of the invention.
Fig. 2 is a schematic diagram of a NFC-based communication apparatus according to another embodiment of the invention.

### DESCRIPTION OF EMBODIMENTS

A further description for the description of embodiments of the invention are made by reference to the drawings hereinafter. It should be understood that modifications on structures and functions may be made to the described embodiments. Moreover, as it may be desired by and advantageous to any given or particular application, one or more characteristics of one embodiment may be combined with one or more characteristics of another embodiment.

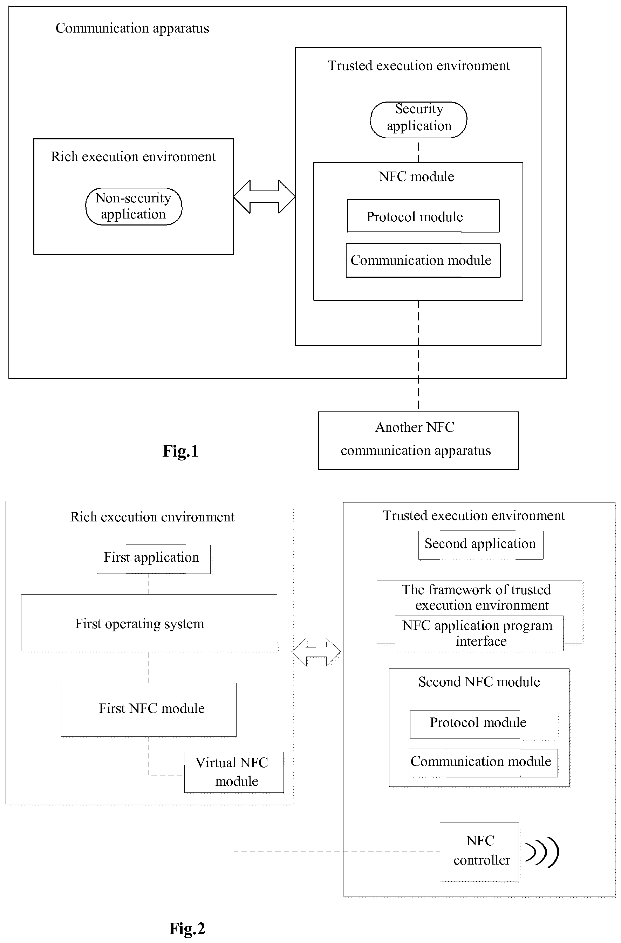

Fig. 1 is a schematic diagram of a NFC-based communication apparatus according to an embodiment of the invention. As showed in the figure, a NFC-based communication apparatus (e.g. a smart mobile communication terminal) comprises a NFC module to implement a NFC function of the communication apparatus. The NFC module is set in a trusted execution environment of the communication apparatus. As showed in the figure, the trusted execution environment is independent of the rich execution environment of the communication apparatus. The trusted execution environment (TEE) may be used for performing a specific application, for example, a security application. The rich execution environment (REE), such as an Android operating system, may be used for performing other applications other than the specific application. Among other things, the NFC module comprises a communication module, which is used for establishing a connection to another NFC apparatus, and a protocol module, which is used for resolving communication data between the communication apparatus and the another NFC apparatus, the protocol module is further used for performing NFC protocols to implement NFC communications. It is understood that the another NFC apparatus in Fig. 1 may be any entity integrated with a NFC function, for example, an IC card, a bank card, a mobile communication device (e.g. a mobile phone), a smart terminal (e.g. a tablet), etc.

Fig. 2 is a schematic diagram of a NFC-based communication apparatus according to another embodiment of the invention. According to the embodiment, a second NFC module set in the trusted execution environment of the communication apparatus may be used for performing a NFC function of a security related application. A security related application is an application installed under the trusted execution environment, such as a second application in Fig. 2, or an application installed under the rich execution environment, such as a first application in Fig. 2. As for the second application, when the NFC function needs to be performed, a NFC application program interface may be employed in the framework of the trusted execution environment such that the second NFC module can be utilized. In that case, the second NFC module may implement the NFC function of the second application via the NFC application program interface in the framework of the trusted execution environment. As for the first NFC application (e.g. the payment application), when a NFC function needs to be performed, another application installed under the trusted execution environment corresponding to the first application may be employed in the framework of the trusted execution environment, then the second NFC module may be utilized by the another application via the NFC application program interface. In that case, the second NFC module may implement the NFC function of the another application via the NFC application program interface in the framework of the trusted execution environment. Herein, the NFC application program interface (API), for example, an API associated with an Open NFC, an NCI protocol, etc., may be customized in accordance with the actual usage.

Continuing with Fig 2, according to one embodiment of the invention, a virtual NFC module may be set in the rich execution environment, which is used for simulating the NFC hardware set in the trusted execution environment, such that the NFC function of the application installed under the rich execution environment can be processed by the NFC hardware. For example, a regular application (a non-security application) in a first operating system (e.g. an Android system) as showed in the figure may implement the NFC function by utilizing the first NFC module via the NFC application program interface of the first operating system. Herein, the first NFC module may be a traditional NFC module, which implements a NFC traditional protocol stack. When the regular application is about to execute the NFC function, its request is sent to a NFC controller (NFCC), by which the data processing is implemented under the trusted execution environment, via the virtual NFC module.

According to one embodiment of the invention, a NFC routing table may be set in the protocol module, which associates an application ID with the system environment, and the application name. Thus, via the information (including application IDs) transmission by the NFC controller, the protocol module may promptly find the system environment that the application located in (e.g. a rich execution environment, a trusted execution environment, a secure carrier environment), and the application name, improving the efficiency of NFC communication. For example, after the NFC communication information arrives, it is resolved by the protocol module to acquire the application ID, and then the system environment and the application name of the application may be inquired through the NFC routing table, enabling the NFC controller to promptly establish a session with the application. In addition, the protocol module may further update the information in the NFC routing table while the application is updated. Moreover, in addition to the application name and the system environment, the routing table may further associate other factors related to the application with the application ID.

According to one and more other embodiments, the NFC module may further comprise an SE (Security Element) management module for implementing an interaction (for example, data archiving, key storage) between the communication data and the SE (e.g. a SIM card, an SSD card, etc.). The NFC module may further comprise a NFC management module for configuring and managing the NFC controller, for example, enabling and disabling the NFC function, resetting the NFC function, setting the NFC service mode.

According to one or more other embodiments, the protocol module in the NFC module may be used for implementing a reader/writer mode and a card simulating mode, as well as implementing a P2P mode with the traditional NFC protocol stack in the rich execution environment (REE). The NFC module according to the invention may be based on a core protocol stack in a traditional NFC protocol stack architecture. In one example, with the security requirement of the TEE trusted execution environment and the storage status matching the TEE trusted execution environment being accounted for, the NFC protocol stack of the NFC module may be part of the traditional NFC protocol stack architecture.

The protocol module may support both the ISO7816 and the ISO 14443 protocol, the ISO14443 protocol is used for performing the non-contact communication between the NFC module and an external card reader, while the ISO7816 protocol is used for performing the data communication between the NFC module and a terminal SE (such as, a SIM card, an SSD card, etc.).

As described above, the NFC module comprises a communication module, which is used for establishing a connection to another NFC apparatus, and a protocol module, which is used for resolving the communication data between the communication apparatus and the another NFC apparatus. The communication module may further be used for determining a NFC-based communication mode. Several NFC communication mode implemented with the NFC module will be described below as examples.

### 1. NFC card reader mode

In the mode, the protocol module receives the readable/writable application data through the NFC API from NFC trusted applications on the TEE, and encapsulates the readable/writable application data in accordance with the data format recognizable by the card reader module. Subsequently, the communication module may send the encapsulated data to the NFCC. At last, the encapsulated data is sent through an antenna to an external non-contact card by the NFCC.

### 2. Card reader mode of the REE end

In the mode, the application data forwarded from REE is received at a NFCC of the TEE end, and the received application data is sent by the NFCC through an antenna to an external non-contact card after being processed. Herein, the application data forwarded from the REE may be generated by non-security applications in an Android system, the application data may be encapsulated by the protocol stack at the REE end, and forwarded to the NFCC for being processed via a virtual NFC module.

### 3. NFC card simulating mode

In the mode, the communication module receives the data sent from the external card reader with the NFCC, and the protocol module may search the respective application through the NFC routing table according to the application ID contained in the data. Then the protocol module will resolve the data sent by the card reader in accordance with the data format recognizable by the card simulating. Optionally, when a request from the card reader requires the participation of an SE, the request may be sent to the respective SE through the SE management module, subsequently, the result is fed back to the external card reader through the SE management module.

### 4. NFC P2P mode

In the mode, a connection may be established between two NFC devices in such a manner as follows. First, a NFC communication request sent from an external NFC device is received by the NFCC, the request is resolved by the protocol module in the NFC module. Upon determining the request to pertain to the P2P mode, the protocol module forwards the request to a virtual NFC module in the REE. The request is then forwarded to a traditional NFC protocol stack in the REE by the virtual NFC module. The traditional protocol stack processes the request to establish a connection between two NFC devices.

According to the above disclosure, one or more functions or steps described above implemented by modules may be implemented in one or more steps of the methods according to the embodiments of the present invention.

The present invention further discloses a NFC-based communication method, comprising: setting a NFC module in the trusted execution environment of the communication apparatus, the trusted execution environment being independent of a rich execution environment of the communication apparatus, wherein, setting a communication module and a protocol module in the NFC module, establishing a connection to another NFC apparatus by use of the communication module, and resolving the communication data between the communication apparatus and the another NFC apparatus by use of the protocol modules.

In one example, the NFC function of a security related application is performed by use of the NFC module.

In one example, the security related application is an application installed under the trusted executing environment or an application installed under the rich executing environment, and where the security related application is a first application installed under the rich executing environment, the NFC function of the first application is implement, by use of the NFC module, via another application installed under the trusted executing environment corresponding to the first application.

In one example, the method further comprises, setting a virtual NFC module in the rich execution environment, simulating the NFC hardware set in the trusted execution environment by use of the virtual NFC module, such that the NFC function of the application installed under the rich execution environment can be processed by the NFC hardware.

In one example, a NFC routing table is further set in the protocol module, the NFC routing table associates an application ID with the system environment and the application name.

With the above description of the embodiments, an ordinary skill in the art may understand, various changes and alternatives may also be made to the description of embodiments of the present invention, without departing from the scope limited by the claims of the invention.

## Claims

1. A Near-Field Communication, NFC-based communication apparatus, wherein the communication apparatus comprises:
a NFC module set in a trusted execution environment of the communication apparatus, the trusted execution environment being independent of a rich execution environment of the communication apparatus, wherein,
t he NFC module comprises a communication module and a protocol module,
t he communication module is configured for establishing a connection to another NFC apparatus,
t he protocol module is configured for resolving the communication data between the communication apparatus and the another NFC apparatus;
wherein, the NFC module is configured for performing a NFC function of a security related application; wherein, the security related application is an application installed under the trusted execution environment or an application installed under the rich execution environment, and
wherein, when the security related application is a first application installed under the rich execution environment, the NFC module implements the NFC function of the first application via another application installed under the trusted execution environment corresponding to the first application; wherein the communication apparatus further comprises a virtual NFC module set in the rich execution environment, the virtual NFC module being configured for simulating the NFC hardware set in the trusted execution environment, such that the NFC function of the application installed under the rich execution environment can be processed by the NFC hardware;
wherein the protocol module is configured to resolve a NFC communication request received from another NFC apparatus, the protocol module is configured to forward the request to the virtual NFC module upon determining the request to pertain to peer-to-peer, P2P, mode, the virtual NFC module is configured to forward the request to a NFC protocol stack in the rich execution environment,
the protocol stack is configured to process the request to establish the connection between the two NFC apparatuses.

2. The communication apparatus of claim 1, wherein,
a NFC routing table is further set in the protocol module, the NFC routing table associates an application ID with the system environment and the application name.

3. A Near-Field Communication, NFC-based communication method, wherein the communication method comprises:
setting a NFC module in a trusted execution environment of the communication apparatus, the trusted execution environment being independent of a rich execution environment of the communication apparatus, wherein,
setting a communication module and a protocol module in the NFC module,
establishing a connection to another NFC apparatus by use of the communication module,
resolving the communication data between the communication apparatus and the another NFC apparatus by use of the protocol module;
wherein, a NFC function of the security related application is performed by use of the NFC module; wherein the security related application is an application installed under a trusted execution environment or an application installed under a rich execution environment, and
wherein, when the security related application is a first application installed under the rich execution environment, the NFC function of the first application is implemented, by use of the NFC module, via another application installed under the trusted execution environment corresponding to the first application; wherein the communication method further comprises:
setting a virtual NFC module in the rich execution environment,
simulating the NFC hardware set in the trusted execution environment by use of the virtual NFC module, such that the NFC function of the application installed under the rich execution environment can be processed by the NFC hardware;
resolving, by the protocol module, a NFC communication request received from another NFC apparatus, forwarding, by the protocol module, the request to the virtual NFC module upon determining the request to pertain to peer-to-peer, P2P, mode, forwarding, by the NFC module, the request to a NFC protocol stack in the rich execution environment,
processing, by the protocol stack, the request to establish the connection between the two NFC apparatuses.

4. The communication method of claim 3, wherein,
a NFC routing table is further set in the protocol module, the NFC routing table associates an application ID with the system environment and the application name.

## Patentansprüche

1. Nahfeldkonummikation(NFC)-basierte Kommunikationsvorrichtung, wobei die Kommunikationsvorrichtung umfasst:
ein NFC-Modul, das in einer vertrauenswürdigen Ausführungsumgebung der Kommunikationsvorrichtung angeordnet ist, wobei die vertrauenswürdige Ausführungsumgebung unabhängig von einer unsicheren Ausführungsumgebung (Rich Execution Environment) der Kommunikationsvorrichtung ist, wobei das NFC-Modul ein Kommunikationsmodul und ein Protokollmodul umfasst,
das Kommunikationsmodul zum Errichten einer Verbindung zu einer anderen NFC-Vorrichtung ausgelegt ist,
das Protokollmodul zum Auflösen der Kommunikationsdaten zwischen der Kommunikationsvorrichtung und der anderen NFC-Vorrichtung ausgelegt ist;
wobei das NFC-Modul zum Durchführen einer NFC-Funktion einer sicherheitsbezogenen Anwendung ausgelegt ist;
wobei die sicherheitsbezogene Anwendung eine in der vertrauenswürdigen Ausführungsumgebung installierte Anwendung ist oder eine in der unsicheren Ausführungsumgebung installierte Anwendung ist und
wobei das NFC-Modul die NFC-Funktion einer ersten Anwendung über eine andere Anwendung implementiert, die in der der ersten Anwendung entsprechenden vertrauenswürdigen Ausführungsumgebung installiert ist, wenn die sicherheitsbezogene Anwendung die erste in der unsicheren
Ausführungsumgebung installierte Anwendung ist;
wobei die Kommunikationsvorrichtung ferner ein virtuelles NFC-Modul umfasst, das in der unsicheren Ausführungsumgebung angeordnet ist, wobei das virtuelle NFC-Modul zum Simulieren der in der vertrauenswürdigen Ausführungsumgebung angeordneten NFC-Hardware ausgelegt ist, sodass die NFC-Funktion der in der unsicheren Ausführungsumgebung installierten Anwendung von der NFC-Hardware verarbeitet werden kann;
wobei das Protokollmodul zum Auflösen einer NFC-Kommunikationsanforderung ausgelegt ist, die von einer anderen NFC-Vorrichtung empfangen wird,
wobei das Protokollmodul nach Bestimmen, dass die Anforderungen einen Peer-to-Peer(P2P)-Modus betrifft, zum Weiterleiten der Anforderung an das virtuelle NFC-Modul ausgelegt ist,
das virtuelle NFC-Modul zum Weiterleiten der Anforderung an einen NFC-Protokollstapel in der unsicheren Ausführungsumgebung ausgelegt ist,
der Protokollstapel zum Verarbeiten der Anforderung zum Errichten der Verbindung zwischen den zwei NFC-Vorrichtungen ausgelegt ist.

2. Kommunikationsvorrichtung nach Anspruch 1, wobei ferner eine NFC-Routing-Tabelle in dem Protokollmodul angeordnet ist, wobei die NFC-Routing-Tabelle eine Anwendungskennung mit der Systemumgebung und dem Anwendungsnamen verknüpft.

3. Nahfeldkommunikation(NFC)-basiertes Kommunikationsverfahren, wobei das Kommunikationsverfahren umfasst:
Anordnen eines NFC-Moduls in einer vertrauenswürdigen Ausführungsumgebung der Kommunikationsvorrichtung, wobei die vertrauenswürdige Ausführungsumgebung unabhängig von einer unsicheren Ausführungsumgebung (Rieh Execution Environment) der Kommunikationsvorrichtung ist, wobei
Anordnen eines Kommunikationsmoduls und eines Protokollmoduls im NFC-Modul,
Errichten eine Verbindung zu einer anderen NFC-Vorrichtung unter Verwendung des Kommunikationsmoduls,
Auflösen der Kommunikationsdaten zwischen der Kommunikationsvorrichtung und der anderen NFC-Vorrichtung unter Verwendung des Protokollmoduls;
wobei eine NFC-Funktion der sicherheitsbezogenen Anwendung unter Verwendung des MFC-Moduls durchgeführt wird;
wobei die sicherheitsbezogene Anwendung eine in einer vertrauenswürdigen Ausführungsumgebung installierte Anwendung ist oder eine in einer unsicheren Ausführungsumgebung installierte Anwendung ist und
wobei die NFC-Funktion einer ersten Anwendung unter Verwendung des NFC-Moduls über eine andere Anwendung implementiert wird, die in der der ersten Anwendung entsprechenden vertrauenswürdigen Ausführungsumgebung installiert ist, wenn die sicherheitsbezogene Anwendung die erste in der unsicheren Ausführungsumgebung installierte Anwendung ist; wobei
das Kommunikationsverfahren weiterhin umfasst:
Anordnen eines virtuellen NFC-Moduls in der unsicheren Ausführungsumgebung, Simulieren der in der vertrauenswürdigen Ausführungsumgebung angeordneten NFC-Hardware unter Verwendung des virtuellen NFC-Moduls, sodass die NFC-Funktion der in der unsicheren Ausführungsumgebung installierten Anwendung von der NFC-Hardware verarbeitet werden kann;
Auflösen einer von einer anderen NFC-Vorrichtung empfangenen NFC-Kommunikationsanforderung durch das Protokollmodul, Weiterleiten der Anforderung des virtuellen NFC Moduls durch das Protokollmodul nach Bestimmen, dass die Anforderung einen Peer-to-Peer(P2P)-Modus betrifft,
Weiterleiten der Anforderung an einen NFC-Protokollstapel in der unsicheren Ausführungsumgebung durch das virtuelle NFC-Modul, Verarbeiten der Anforderung zum Errichten der Verbindung zwischen den zwei NFC-Vorrichtungen durch den Protokollstapel.

4. Kommunikationsverfahren nach Anspruch 3, wobei ferner eine NFC-Routing-Tabelle in dem Protokollmodul angeordnet ist, wobei die NFC-Routing-Tabelle eine Anwendungskennung mit der Systemumgebung und dem Anwendungsnamen verknüpft.

## Revendications

1. Appareil de communication à base de communication en champ proche NFC, cet appareil de communication comprenant :
un module de NFC établi dans un environnement d'exécution dédié de l'appareil de communication, l'environnement d'exécution dédié étant indépendant d'un environnement d'exécution riche de l'appareil de communication,
le module de NFC comprenant un module de communication et un module de protocole,
le module de communication étant configuré pour établir une connexion avec un autre appareil de NFC,
le module de NFC étant configuré pour réaliser une fonction NFC d'une application relative à la sécurité ;
l'application relative à la sécurité étant une application installée sous l'environnement d'exécution dédié ou une application installée sous l'environnement d'exécution riche, et,
lorsque l'application relative à la sécurité est une première application installée sous l'environnement d'exécution riche, le module de NFC met en œuvre la fonction NFC de la première application via une autre application installée sous l'environnement d'exécution dédié correspondant à la première application ;
l'appareil de communication comprenant en outre un module de NFC virtuel établi dans l'environnement d'exécution riche, le module de NFC virtuel étant configuré pour simuler le matériel de NFC établi dans l'environnement d'exécution dédié, de sorte que la fonction NFC de l'application installée sous l'environnement d'exécution riche peut être traitée par le matériel de NFC ;
le module de protocole étant configuré pour résoudre une requête de communication NFC reçue de la part d'un autre appareil de NFC,
le module de protocole étant configuré pour envoyer la requête au module de NFC virtuel à la détermination de la requête de permission du mode de pair à pair P2P,
le module de NFC virtuel étant configuré pour envoyer la requête à une pile de protocoles de NFC dans l'environnement d'exécution, la pile de protocoles étant configurée pour traiter la requête afin d'établir la connexion entre les deux appareils de NFC.

2. Appareil de communication selon la revendication 1, dans lequel un tableau de routage de NFC est en outre établi dans le module de protocole, le tableau de routage de NFC associant un ID d'application à l'environnement du système et au nom d'application.

3. Procédé de communication à base de communication en champ proche NFC, ce procédé de communication comprenant :
l'établissement d'un module de NFC dans un environnement d'exécution dédié de l'appareil de communication, l'environnement d'exécution dédié étant indépendant d'un environnement d'exécution riche de l'appareil de communication, l'établissement d'un module de communication et d'un module de protocole dans le module de NFC,
l'établissement d'une connexion avec un autre appareil de NFC en utilisant le module de communication,
la résolution des données de communication entre l'appareil de communication et l'autre appareil de NFC en utilisant le module de protocole ;
dans lequel l'application relative à la sécurité est une application installée sous un environnement d'exécution dédié ou une application installée ion installée sous un environnement d'exécution riche, et
dans lequel, lorsque l'application relative à la sécurité est une première application installée sous l'environnement d'exécution riche, la fonction NFC de la première application est mise en œuvre en utilisant le module de NFC via une autre application installée sous l'environnement d'exécution dédié correspondant à la première application ;
ce procédé de communication comprenant en outre :
l'établissement d'un module de NFC virtuel dans l'environnement d'exécution riche,
la simulation du matériel de NFC établi dans l'environnement d'exécution dédié en utilisant le
module de NFC virtuel, de sorte que la fonction NFC de l'application instalée sous l'environnement d'exécution riche peut être traitée par le matériel de NFC ;
la résolution, par le module de protocole, d'une requête de communication NFC reçue de la part d'un autre appareil de NFC, l'envoi, par le module de protocole, de la requête au module de NFC virtuel à la détermination de la requête de permission d'un mode de pair à pair P2P,
l'envoi, par le module de NFC, de la requête à une pile de protocoles de NFC dans l'environnement d'exécution riche,
le traitement, par la pile de protocoles, de la requête pour établir la connexion entre les deux appareils de NFC.

4. Procédé de communication selon la revendication 3, dans lequel une un tableau de routage de NFC est en outre établi dans le module de protocole, le tableau de routage de NFC associant un ID d'application à l'environnement du système et au nom d'application.
